# EUROPÄISCHE PATENTANMELDUNG

(11) **EP 1 205 323 A1**
(43) Veröffentlichungstag der Anmeldung: **15.05.2002**
(21) Anmeldenummer: 01125511.4
(22) Anmeldetag: 25.10.2001
(51) Int. Cl.: B60J 7/06

(54) **Faltverdeckanordnung**

(30) Priorität: 11.11.2000 DE 10056051
(71) Anmelder: Trailer System Engineering GmbH & Co. KG, 72365 Ratshausen (DE)
(72) Erfinder: Eberle, Reinhard, 89077 Ulm (DE)
(74) Vertreter: Weber, Gerhard

(57) **Zusammenfassung**

Für eine Faltverdeckanordnung, insbesondere für Planenverdecke von Fahrzeugaufbauten, mit längsverschiebbaren Laufwagen (LW1) und zwischen diesen befindlichen, gelenkig verschwenkbaren Bügelpaaren (B), wird eine besondere Bügelform vorgeschlagen, bei welcher die Bügel (B) über ineinandergreifende Ösen, insbesondere in Form von einseitig offenen Wendelgängen (WE) gelenkig untereinander verbunden sind. Die untereinander verbundenen Bügel (B) sind vorzugsweise formidentisch. Die Bügel (B) können vorteilhafterweise aus einem durchgehenden Drahtabschnitt durch Verformen gebildet und damit kostengünstig herstellbar sein. Die Bügel (B) zeichnen sich durch eine besondere Stabilität und Leichtgängigkeit aus.

## Beschreibung

Die Erfindung betrifft eine Faltverdeckanordnung, insbesondere für Planenverdecke von Fahrzeugaufbauten.

Faltbare Planenverdecke ermöglichen die Öffnung des abgedeckten Frachtraums nach oben und erlauben daher eine Be- und Entladung auch von oben. Typischerweise sind in Längsträgern verfahrbare Laufwagen quer zur Längsrichtung paarweise durch Querträger verbunden. In Längsrichtung aufeinanderfolgende Laufwagen entlang eines Längsträgers sind durch Bügelpaare gekoppelt, deren Bügel zwischen einer Aufrechtstellung und einer Streckstellung um Schwenkachsen schwenkbar an den Laufwagen gelagert und den Laufwagen abgewandt gelenkig miteinander verbunden sind.

Eine derartige Faltverdeckanordnung ist beispielsweise aus der EP 0 778 169 A1 bekannt. Die Bügel bestehen aus Leisten, welche an der gelenkigen Verbindung einen gemeinsamen Spriegel umgreifen. Der Spriegel ragt über das Gelenk seitlich hinaus und sichert in der Streckstellung der Leisten durch Anschlag auf dem Längsträger eine gering angewinkelte Ausrichtung der verbundenen Leisten in Richtung der Aufrechtstellung.

Der vorliegenden Erfindung liegt die Aufgabe zugrunde, eine stabile und kostengünstige Faltverdeckanordnung anzugeben.

Die Erfindung ist im Patentanspruch 1 beschrieben. Die abhängigen Ansprüche enthalten vorteilhafte Ausgestaltungen und Weiterbildungen der Erfindung.

Bei der Erfindung sind die Bügel an ihrer gelenkigen Verbindung über ineinandergreifende Ösen verbunden, wodurch ein Gelenk mit einer oder mehreren bezüglich der Bügel fest angeordneten Achsen sowie gesonderte Verbindungselemente wie Bolzen, Stäbe, Platten oder dgl. entbehrlich sind. Dies kann zu einer Reduzierung der Anzahl der zusammenzufügenden Teile führen, die Zusammenfügung vereinfachen und/oder zu einer höheren Stabilität der Gelenkverbindung, insbesondere im Vergleich zu einer Gelenkverbindung über Kunststoffplatten führen.

Besonders vorteilhaft ist eine Ausführung, bei welcher die beiden verbundenen Bügel formidentisch sind, so daß lediglich eine einzige Bügelform erforderlich ist.

Vorteilhafterweise ist wenigstens eine der im Bügelgelenk verbundenen Ösen einseitig offen. Die von den Ösen aufgespannten Flächen sind vorzugsweise beide gegen die Gelenkachse, welche zu den Schwenkachsen auf den Laufwagen parallel ist, geneigt. Als Gelenkachse sei eine gedachte Achse in der gelenkigen Verbindung der Bügel eines Paares bezeichnet, um welche die Relativbewegung der Bügel zueinander erfolgt. Die Position der Gelenkachse kann sich bei der Bewegung innerhalb des Gelenks verändern.

Eine bevorzugte Ausführungsform sieht vor, daß die Ösen als einfache Wendelgänge ausgebildet sind, wobei die Wendelachsen gegen die Richtung der Gelenkachse bzw. der Schwenkachsen auf den Laufwagen und auch zueinander geneigt sind. Insbesondere können die Wendelachsen zumindest annähernd senkrecht zueinander ausgerichtet und z. B. ungefähr 45° gegen die Gelenkachse geneigt sein. Der Wendelgang verläuft nicht notwendigerweise auf einem Kreiszylinder um die Wendelachse.

Die Bügel können vorteilhafterweise einschließlich der gewendelten Ösen aus einem durchgehenden geformten Drahtstück bestehen. Die Ösen können gemäß einer bevorzugten Ausführungsform in der Streckstellung der Bügel in einen Laufkanal des Längsträgers, in welchem Rollen der Laufwagen geführt sind, eintauchen.

Um ein zuverlässiges Aufstellen der Bügel unter einer benachbarten Laufwagen zusammenschiebenden Kraft zu gewährleisten, ist die Bewegung in Streckstellung der Bügel vorteilhafterweise durch einen Anschlag an den Laufwagen und/oder einen Anschlag im Ösengelenk begrenzt, so daß eine geringe gegenseitige Anwinkelung der Bügel in Streckstellung verbleibt. Besonders günstig ist auch, daß die Bügel gelenkseitig den Längsträger zumindest teilweise überspannen und die Achsen der Schwenklager der Bügel auf den Laufwagen tiefer liegen als die Gelenkachse bei gelenkseitig auf dem Längsträger aufliegenden Bügeln.

Die Erfindung ist nachfolgend anhand bevorzugter Ausführungsbeispiele unter Bezugnahme auf die Abbildungen noch eingehend veranschaulicht. Dabei zeigt
- Fig. 1: eine Seitenansicht eines Laufwagenpaars in Streckstellung der Bügel
- Fig. 2: eine Draufsicht auf Fig. 1
- Fig. 3: eine Seitenansicht in Aufrechtstellung der Bügel
- Fig. 4: eine Schrägansicht zu Fig. 3
- Fig. 5: einen Bügel senkrecht zur Bügelebene
- Fig. 6: den Bügel nach Fig. 5 in Seitenansicht
- Fig. 7: den Bügel nach Fig. 5 in Längsrichtung
- Fig. 8: ein Eintauchen eines Bügelgelenks in einen Laufkanal eines Längsträgers

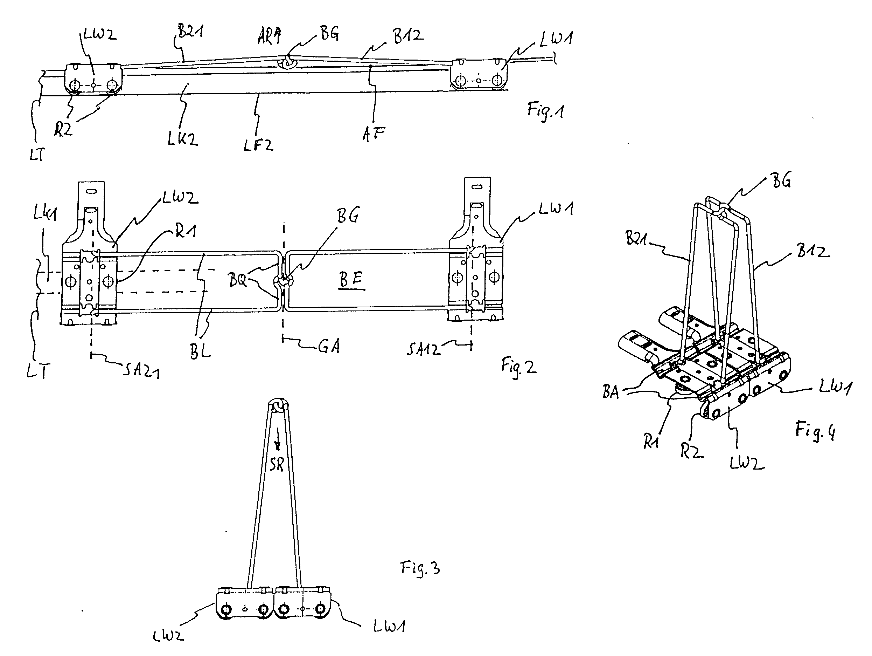

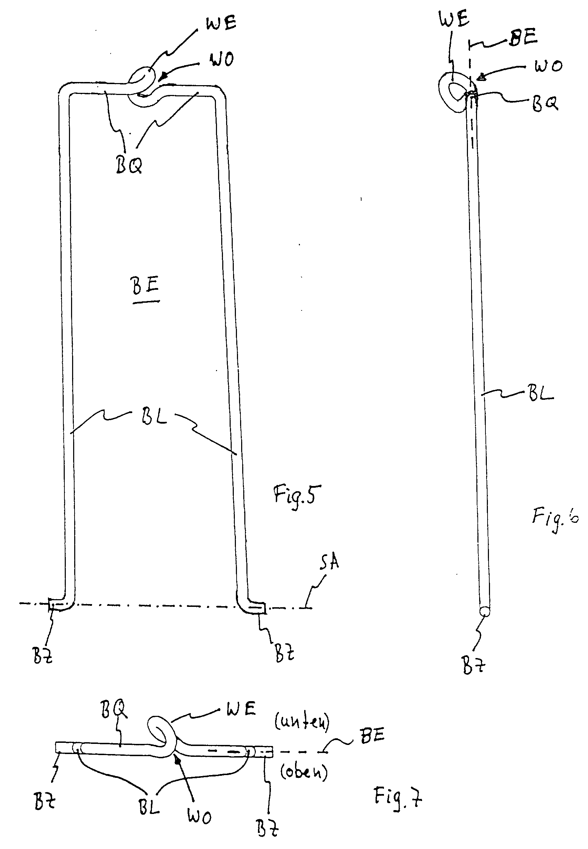

Fig. 1 und Fig. 2 zeigen eine Anordnung von zwei Laufwagen LW1, LW2, welche auf einem angedeuteten Längsträger LT verfahrbar und insbesondere in ihrem relativen Abstand veränderbar sind. Im ersten Laufwagen LW1 ist ein erster Bügel B12 um eine Schwenkachse SA12 gelagert, im zweiten Laufwagen LW2 in entsprechender Weise ein zweiter Bügel B21 um eine Schwenk-achse SA21. Die Bügel B12 und B21 sind an ihren den Laufwagen abgewandten Abschnitten in einem Bügelgelenk miteinander verbunden und in dem Bügelgelenk um eine zu den Schwenkachsen SA12, SA 21 parallele, quer zur Längsrichtung des Längsträgers verlaufende horizontale Gelenkachse GA relativ zueinander verschwenkbar. Die Anordnung setzt sich in Trägerlängsrichtung über weitere Bügel wie in Fig. 1 bei LW1 angedeutet um weitere Laufwagen fort. Diese sind der Übersichtlichkeit halber nicht mit eingezeichnet.

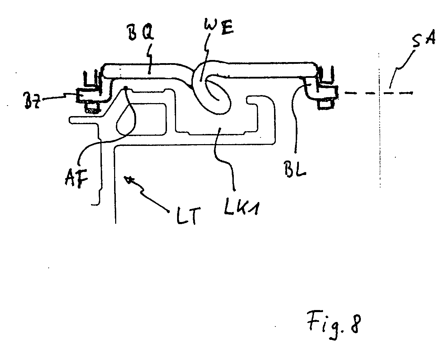

Die Bügel spannen zwischen Längsarmen BL und diese verbindenden Querarmen BQ eine im wesentlichen ebene Bügelfläche BE auf, welche in der in Fig. 1 und Fig. 2 skizzierten Streckstellung der Bügel mit maximalem Laufwagenabstand annähernd horizontal verlaufen. Vorteilhafterweise liegen die Längsarme BL der im Gelenk verbundenen Bügel in Bügelaufnahmen der Laufwagen mit einer geringen Steigung zum Bügelgelenk BG hin an, so daß sich eine geringe Voranstellung der Bügel in Aufstellrichtung AR ergibt und dadurch wiederum ein erleichtertes Aufrichten möglich ist und insbesondere eine Überstreckung nach unten vermieden wird. Die das Bügelgelenk BG bildenden Ösen der Bügel sind in der Streckstellung wie aus Fig. 1 anschaulich ersichtlich, unsymmetrisch zu den Bügelflächen überwiegend nach unten gerichtet, so daß sich eine nahezu ebene durchgehende obere Planenfläche ergibt.
Durch Einwirkung einer die Laufwagen LW1, LW2 aufeinander zu bewegenden Kraft richten sich die Bügel in eine Aufrechtstellung wie in Fig. 3 und Fig. 4 skizziert auf. Die Bewegung der Laufwagen ist entlang der Längsträger durch in Laufkanälen LK1, LK2 der Längsträger laufende Rollen R1 bzw. R2 auf den Laufwagen geführt. Bei Auseinanderziehen der in Fig. 3 und Fig. 4 in ihrem minimalen Abstand skizzierten Laufwagen verschiebt sich das Bügelgelenk aus der in Fig. 3 skizzierten höchsten Position in Streckrichtung SR nach unten.

In Fig. 5 bis 7 ist eine bevorzugte Ausführung eines Bügels in verschiedenen Ansichten skizziert.

Der Bügel besteht aus einem zwischen Enden BZ durchgehenden Draht, an welchem durch Verformen die verschiedenen Funktionsabschnitte ausgebildet sind. Der Draht kann insbesondere über die gesamte Länge einen einheitlichen, vorzugsweise runden Querschnitt von z. B. 6 mm Durchmesser aufweisen. Der Bügel kann dadurch besonders kostengünstig aus nur einem als Stangenmaterial verfügbaren Drahtstück hergestellt werden.

An dem Bügel können insbesondere
a) Lagerzapfen BZ zum Einsatz in Schwenklager auf den Laufwagen
b) Längsarme BL
c) ein die Längsarme verbindender Querarm BQ
d) eine Öse in Form eines Wandelgangs WE im Querarm ausgebildet sein.

Der Bügel ist vorzugsweise so geformt, daß er im in die Schwenklager des Laufwagens eingesetztem Zustand soweit gespreizt ist, daß die Enden BZ selbsthaltend in den Schwenklagern liegen, oder daß er unter leichter Spannung in Richtung der die Lagerzapfen bildenden Drahtenden elastisch verspannt ist. Zusätzliche Lagersicherungen können vorteilhafterweise vorgesehen sein.

Die Längsarme BL der Bügel verlaufen bei in den Laufwagen eingesetzten Bügeln vorzugsweise im wesentlichen parallel zueinander und in Streckstellung parallel zur Längsrichtung der Längsträger. Im skizzierten Beispiel der Fig. 5 sind die Längsarme BL des Bügels von dem Querarm BQ zu den Bügelenden hin leicht divergierend ausgerichtet, um die genannte Vorspreizung oder Vorspannung im eingesetzten Zustand aufzubringen. Die Länge der Längsarme BL bestimmt den maximalen Abstand der Laufwagen in Streckstellung und die Aufstellhöhe in Aufrechtstellung. Die Längsarme sind wie im skizzierten Beispiel vorteilhafterweise gerade.

Der Querarm BQ verläuft beidseitig des Wendelgangs WE vorzugsweise fluchtend gerade und im eingesetzten Zustand horizontal. Der Wendelgang WE ist im wesentlichen mittig zwischen den Längsarmen BL angeordnet. Die von den Längsarmen BL und dem Querarm BQ aufgespannte Fläche BE sei als Bügelfläche bezeichnet.

Die Wendelachse WA des Wendelgangs WE verläuft geneigt zu der zur Schwenkachse SA parallelen Ausrichtung des Querarms BQ. Hierdurch ist es vorteilhafterweise möglich, für alle Bügel eine einheitliche Form zu verwenden. Die Wendelachsen zweier mit ineinandergehängten Ösen verbundener, in die Laufwagen eingesetzter Bügel sind dann gleichfalls in allen Positionen geneigt zueinander und geneigt zu der zu den Querarmen parallelen Gelenkachse GA ausgerichtet.

Der Wendelgang WE ist überwiegend nach einer Seite der Bügelfläche BE ausgerichtet und die Wendelgänge eines Bügelgelenks weisen in der Streckstellung wie aus Fig. 1 anschaulich ersichtlich beide von den Bügelflächen nach unten, in der Aufrechtstellung nach Fig. 3 beide auf die jeweils andere Bügelfläche zu, wodurch sich in allen Positionen von der Streckstellung bis zur Aufrechtstellung eine vorteilhafte Planenauflage ergibt. Ein geringer Überstand des Wendelgangs kann beim Ausmessen einer Planenvorlage mit Streckstellung aller Bügelpaare zur leichteren Erkennung der Längsposition der Bügelgelenke vorteilhaft sein. Die Öffnungen WO der Wendelgänge verbundener Bügel weisen in entsprechender Weise in der Streckstellung nach oben und in der Aufrechtstellung voreinander weg.

Die zueinander geneigten Wendelachsen verbundener gleich geformter Bügel führen automatisch zu einer symmetrischen Lage der Bügelflächen in allen Stellungen des Bügelpaars. Die Anlageflächen, an welchen sich die Bügel in den Wendelgängen berühren, sind sehr klein, woraus eine sehr geringe Gelenkreibung resultiert. Andererseits führt der Draht als Wendelmaterial zu einer hohen Stabilität des Gelenks, insbesondere im Vergleich zu Kunststoffteilen als bügelverbindende Gelenkelemente. Der Wendelverlauf führt weiter zu einem die Aufrichtung der Bügel unterstützenden Moment im Bügelgelenk, was insbesondere für die anfängliche Aufrichtung aus der Streckstellung von Vorteil ist.

Vorteilhaft für die anfängliche Aufrichtung aus der Streckstellung ist auch, die Schwenkachse im Laufwagen gegen die obere Fläche der Laufwagenkonsole anzusenken und insbesondere tiefer zu legen als die tiefste zu erwartende Position der Gelenkachse des Bügelgelenks. Insbesondere kann die Schwenk-achse tiefer liegen als die obere Begrenzung AF des Längsträgers LT (Fig. 1). Es zeigt sich, daß in der extremen Streckstellung die Gelenkachse im Bügelgelenk annähernd auf der Höhe der Querarme und damit vorteilhaft hoch liegt. Das Bügelgelenk kann vorteilhafterweise in der Streckstellung in einen nach oben offenen Laufkanal LK1 des Längsträgers, in welchem die Rollen R1 geführt sind, eintauchen, so daß auch bei zusätzlicher Planenbelastung, insbesondere durch Schneelast, das Bügelgelenk unter elastischer Durchbiegung der Längsarme BL nach unten ausweichen kann, ohne an dem Längsträger punktuell anzuliegen und zu scheuern. Das Eintauchen des Bügelgelenks ist in Fig. 8 anhand eines Ausschnitts aus einem Längsträgerprofil mit nach oben offenem Laufkanal LK1 und einem einzelnen Bügel mit unter die obere Begrenzung des Längsträgers abgesenkter Schwenkachse SA veranschaulicht. Der Laufkanal ist mittig zwischen den seitlich beabstandeten Schwenklagern des Bügels im Laufwagen gelegen.

Die vorstehend und in den Ansprüchen angegebenen sowie die den Abbildungen entnehmbaren Merkmale sind sowohl einzeln als auch in verschiedenen Kombinationen vorteilhaft realisierbar. Die Erfindung ist nicht auf die verschiedenen Ausführungsbeispiele beschränkt, sonders im Rahmen fachmännischen Könnens in mancherlei Weise abwandelbar.

## Patentansprüche

1. Faltverdeckanordnung, insbesondere für Planenverdecke an Fahrzeugaufbauten, mit in Längsführungen in seitlich beabstandeten Längsträgern in einer Längsrichtung verschiebbaren Laufwagen und je einem Paar von Bügeln zwischen aufeinanderfolgenden Laufwagen, wobei die Bügel eines Paars zwischen einer Aufrechtstellung und einer Streckstellung um Schwenkachsen schwenkbar an den Laufwagen gelagert und den Laufwagen abgewandt gelenkig miteinander verbunden sind, **dadurch gekennzeichnet, daß** die Bügel über ineinandergreifende Ösen miteinander verbunden sind.

2. Anordnung nach Anspruch 1, **dadurch gekennzeichnet, daß** die von ineinandergreifenden Ösen aufgespannten Flächen unterschiedlich gegen die Schwenkachsen ausgerichtet sind.

3. Anordnung nach Anspruch 1 oder 2, **dadurch gekennzeichnet, daß** wenigstens eine von zwei ineinandergreifenden Ösen einseitig offen ist.

4. Anordnung nach einem der Ansprüche 1 bis 3, **dadurch gekennzeichnet, daß** die Ösen als einfache Wendelgänge mit gegen die Schwenkachsen geneigter Wendelachsen ausgebildet sind.

5. Anordnung nach Anspruch 4, **dadurch gekennzeichnet, daß** die Wendelgänge in Bewegungsrichtung von der Streckstellung in Aufrechtstellung offen sind.

6. Anordnung nach einem der Ansprüche 1 bis 4, **dadurch gekennzeichnet, daß** die Ösen überwiegend auf der in Streckstellung den Längsführungen zuweisenden Seite der von den Bügeln aufgespannten Fläche liegen.

7. Anordnung nach einem der Ansprüche 1 bis 6, **dadurch gekennzeichnet, daß** die Längsführung einen zu den Laufwagen und den Bügeln offenen Laufkanal für Rollen der Laufwagen aufweist und daß die Ösen in der Streckstellung der Bügel in den Laufkanal eintauchen können.

8. Anordnung nach einem der Ansprüche 1 bis 7, **dadurch gekennzeichnet, daß** die Bügel einschließlich der Ösen aus einem durchgehenden Drahtstück bestehen.

9. Anordnung nach einem der Ansprüche 1 bis 8, **dadurch gekennzeichnet, daß** die beiden Bügel eines Bügelpaars formidentisch sind.

10. Anordnung nach einem der Ansprüche 1 bis 9, **dadurch gekennzeichnet, daß** die Schwenkung der Bügel in Streckstellung durch einen ersten Anschlag an den Laufwagen und/oder einen zweiten Anschlag der gegenseitigen Gelenkverbindung eines Bügelpaars begrenzt ist.

11. Anordnung nach einem der Ansprüche 1 bis 10, **dadurch gekennzeichnet, daß** die Schwenkachsen der Bügel tiefer liegen als die höchste den Bügeln nach oben zuweisende Fläche des Längsträgers.
